Europäisches Patentamt

European Patent Office

Office européen des brevets

(11) Veröffentlichungsnummer: **0 218 302 B1**

# EUROPÄISCHE PATENTSCHRIFT

(45) Veröffentlichungstag der Patentschrift: **28.04.93**

(51) Int. Cl.5: **B01D 53/36**, B01J 21/06, C01B 17/04

(21) Anmeldenummer: **86201723.3**

(22) Anmeldetag: **04.10.86**

(54) **Verfahren zum Reinigen von Schwefelwasserstoff und Schwefeldioxid enthaltendem Abgas.**

(30) Priorität: **08.10.85 DE 3535815**

(43) Veröffentlichungstag der Anmeldung:
**15.04.87 Patentblatt 87/16**

(45) Bekanntmachung des Hinweises auf die
Patenterteilung:
**28.04.93 Patentblatt 93/17**

(84) Benannte Vertragsstaaten:
**DE FR GB IT NL**

(56) Entgegenhaltungen:
DE-B- 1 667 636
FR-A- 2 348 735
FR-A- 2 511 663

(73) Patentinhaber: **METALLGESELLSCHAFT AG**
**Reuterweg 14 Postfach 3724**
**W-6000 Frankfurt/M.1(DE)**

(72) Erfinder: **Storp, Klaus, Dr.**
**Fritz-Schubert-Ring 46**
**W-6000 Frankfurt am Main 60(DE)**
Erfinder: **Ruhl, Emil, Dr.**
**Hügelstrasse 191**
**W-6000 Frankfurt am Main(DE)**

(74) Vertreter: **Rieger, Harald, Dr.**
**Reuterweg 14**
**W-6000 Frankfurt am Main (DE)**

EP 0 218 302 B1

Rank Xerox (UK) Business Services
(3.10/3.5x/3.0.1)

## Beschreibung

Die Erfindung betrifft ein Verfahren zum Reinigen von $H_2S$- und $SO_2$-haltigem Abgas, wobei man das Abgas, das pro Mol $SO_2$ mindestens 2,2 Mol $H_2S$ enthält, durch eine erste katalytische Reinigungsstufe unter weitgehender Entfernung von $SO_2$ und Bildung von Elementarschwefel leitet, dem Abgas aus der ersten Reinigungsstufe Sauerstoff zumischt, aus dem Gemisch in einer zweiten katalytischen Reinigungsstufe unter Umsetzung von $H_2S$ ebenfalls Elementarschwefel erzeugt und den Katalysator mindestens einer Reinigungsstufe durch Entfernen des Elementarschwefels periodisch regeneriert.

Ein solches Verfahren ist aus dem deutschen Patent 16 67 636 und dem dazu korrespondierenden US-Patent 3 637 352 bekannt. Hierbei verwendet man in den Reinigungsstufen Aktivkohle als Katalysator, wobei jedoch beträchtliche Mengen an $SO_2$ gebildet werden, die im abströmenden Abgas unerwünscht sind. Die Verwendung eines $Al_2O_3$-reichen, imprägnierten Katalysators zur Bildung von Elementarschwefel aus $H_2S$-haltigen Gasen ist in FR-A-2 348 735 beschrieben.

Der Erfindung liegt die Aufgabe zugrunde, das eingangs genannte Verfahren zu verbessern, lange Standzeiten des Katalysators zu erreichen und die Bildung von $SO_2$ ganz oder weitgehend zu unterdrücken. Erfindungsgemäß geschieht dies dadurch, daß man in der ersten Reinigungsstufe einen Katalysator verwendet, der zu mindestens 90 Gew.% aus $TiO_2$ oder $Al_2O_3$ besteht, daß der Katalysator der zweiten Reinigungsstufe zu mindestens 90 Gew.% aus $TiO_2$ besteht und daß die Katalysatoren der beiden Reinigungsstufen als Imprägnierung mindestens eines der Metalle Nickel, Eisen oder Kobalt enthalten. Vorzugsweise sind die Katalysatoren zu 0,5 bis 3 Gew.% mit mindestens einem der Metalle Nickel, Eisen oder Kobalt imprägniert. Enthält das Abgas neben $H_2S$ und $SO_2$ auch noch COS und/oder $CS_2$, so empfiehlt es sich, der ersten Reinigungsstufe eine katalytische Hydrolysestufe vorzuschalten, deren Katalysator zu mindestens 90 Gew.% aus $TiO_2$ oder $Al_2O_3$ besteht. In dieser Hydrolysestufe, in welcher die Temperaturen vorzugsweise bei 200 bis 350°C liegen, setzt man COS beziehungsweise $CS_2$ mit Wasser zu $H_2S$ und $CO_2$ um.

Die Temperaturen in der ersten und zweiten Reinigungsstufe liegen zumeist im Bereich von 80 bis 150°C. Da das Abgas zunächst durch die erste Reinigungsstufe geleitet wird, wobei man das $SO_2$ praktisch vollständig aus dem Abgas entfernt, fällt in der ersten Reinigungsstufe eine viel größere Menge an Elementarschwefel an als bei gleicher Betriebszeit in der anschließenden zweiten Reinigungsstufe. Deshalb kann man den Katalysator der ersten Reinigungsstufe regenerieren und den noch wenig beladenen Katalysator aus der zweiten Reinigungsstufe in der ersten Reinigungsstufe verwenden.

Der bevorzugte Katalysator für die erste und die zweite Reinigungsstufe sowie auch für die katalytische Hydrolysestufe besteht zu mindestens 95 Gew.% aus $TiO_2$ mit einer Oberfläche nach BET von mindestens 50 $m^2/g$. Der $TiO_2$-Katalysator ist vorzugsweise mit Nickel imprägniert. Für die Herstellung dieses Katalysators kann folgendes Verfahren angewandt werden:

Formkörper aus $TiO_2$ werden mit einer wäßrigen Lösung eines oder mehrerer geeigneter Salze, zum Beispiel Sulfate der Imprägnierungsmetalle, wie Nickelsulfat, getränkt, bei etwa 150°C getrocknet und bei etwa 350°C im Luftstrom kalziniert. Beim Gebrauch des Katalysators wandelt sich die auf dem Träger in Form von Oxid oder Metallsalz befindliche Imprägnierung sofort in Metallsulfid um, wodurch die Wirksamkeit des Katalysators jedoch nicht beeinträchtigt wird. Prinzipiell auf die gleiche Weise kann ein imprägnierter $Al_2O_3$-Katalysator hergestellt werden.

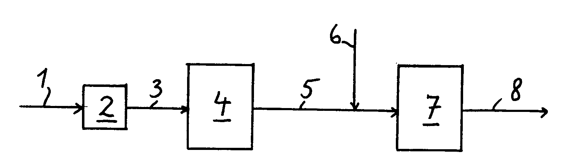

Einzelheiten des Verfahrens werden mit Hilfe der Zeichnung erläutert, die in schematischer Darstellung die Aufeinanderfolge der Verfahrensschritte wiedergibt.

Das zu reinigende Abgas, das $H_2S$ und $SO_2$ und daneben in geringer Konzentration von 0,01 bis 0,5 Vol.% auch noch COS und/oder $CS_2$ enthält, kommt aus der Leitung 1. Das Molverhältnis $H_2S$ zu $SO_2$ im Abgas liegt im Bereich von 2,2 : 1 bis 4 : 1. Dieses Abgas wird zunächst in der Hydrolysestufe 2 bei Temperaturen im Bereich von 200 bis 350°C an einem imprägnierten $TiO_2$- oder $Al_2O_3$-Katalysator mit Wasserdampf umgesetzt, wobei die Reaktionsgleichungen

$$COS + H_2O \rightarrow H_2S + CO_2 \text{ sowie}$$
$$CS_2 + 2H_2O \rightarrow 2H_2S + CO_2$$

gelten.

In der ersten Reinigungsstufe 4 wird in adiabatischer Fahrweise an einem imprägnierten $TiO_2$- oder $Al_2O_3$-Katalysator $SO_2$ praktisch vollständig entfernt, wobei die Reaktion

$$2H_2S + SO_2 \rightarrow 3S + 3H_2O$$

abläuft. Der gebildete Elementarschwefel wird auf dem Katalysator adsorbiert. Das die erste Reinigungsstufe in der Leitung 5 verlassende Abgas enthält als störende Substanz im wesentlichen nur noch $H_2S$. Dieses Abgas wird mit Sauerstoff oder sauerstoffhaltigem Gas, zum Beispiel Luft, aus der Leitung 6 gemischt, so daß in der zweiten Reinigungsstufe 7 die Erzeugung von Elementarschwe-

fel nach der Reaktion

$$2H_2S + O_2 \rightarrow 2S + 2H_2O$$

möglich wird. Die Sauerstoff-Dosierung durch die Leitung 6 wird bevorzugt so gesteuert, daß der $O_2$-Gehalt im der Reinigungsstufe 7 aufgegebenen Gemisch etwa dem 1,5-fachen stöchiometrischen Bedarf entspricht. Das Abgas in der Leitung 8 enthält noch höchstens 50 Vol.ppm $H_2S$ und 500 Vol.ppm $SO_2$.

Die Hydrolysestufe 2 sowie die beiden Reinigungsstufen 4 und 7 werden bevorzugt adiabatisch betrieben, wobei der Katalysator ein Festbett bildet. In allen drei Stufen kann derselbe imprägnierte $TiO_2$- oder $Al_2O_3$-Katalysator verwendet werden. In den Stufen 4 und 7 liegen die Temperaturen bevorzugt im Bereich von 80 bis 150 °C.

Beispiel:

Ein $H_2S$ und $SO_2$ enthaltendes Gas mit einer Temperatur von 125 °C und der nachfolgenden Zusammensetzung wird einem der Zeichnung entsprechenden Verfahren ohne Hydrolysestufe unterworfen.
Gaszusammensetzung:
$H_2S$ 1,2 Vol.%
$SO_2$ 0,5 Vol.%
$H_2O$ 30 Vol.%
$N_2$ 68,3 Vol.%
Volumenstrom des Gases (bei 0 °C und 1 bar): 0,4 $m^3$/h Katalysatorvolumen in der Reinigungsstufe 4: 1 Liter
Der Katalysator besteht aus einem $TiO_2$-Träger mit ca. 97 Gew.% $TiO_2$ und einer Nickelsulfatimprägnierung, die 1 Gew.% Ni entspricht.
Das Gas der Leitung 5 hat folgende Restgehalte an S-Verbindungen:
$H_2S$ 2120 Vol.ppm
$SO_2$ 60 Vol.ppm
Dieses Gas wird mit Luft versetzt, so daß der Sauerstoffgehalt im Gas 0,16 Vol.% beträgt. Dieses Gas wird mit einer Temperatur von 125 °C der zweiten Reinigungsstufe 7 zugeführt, die den gleichen Katalysator mit gleichem Volumen wie die erste Reinigungsstufe 4 enthält. Nach Verlassen der zweiten Reinigungsstufe beträgt der Restgehalt an S-Verbindungen im austretenden Gas:
$H_2S$ 0 - 2 Vol.ppm
$SO_2$ 165 Vol.ppm
Der Gesamtwirkungsgrad der durch die beiden Stufen erreichten Entschwefelung beträgt somit ca. 99,0 %.

**Patentansprüche**

1. Verfahren zum Reinigen von $H_2S$- und $SO_2$-haltigem Abgas, wobei man das Abgas, das pro Mol $SO_2$ mindestens 2,2 Mol $H_2S$ enthält, durch eine erste katalytische Reinigungsstufe unter weitgehender Entfernung von $SO_2$ und Bildung von Elementarschwefel leitet, dem Abgas aus der ersten Reinigungsstufe Sauerstoff zumischt, aus dem Gemisch in einer zweiten katalytischen Reinigungsstufe unter Umsetzung von $H_2S$ ebenfalls Elementarschwefel erzeugt und den Katalysator mindestens einer Reinigungsstufe durch Entfernen des Elementarschwefels periodisch regeneriert, dadurch gekennzeichnet, daß man in der ersten Reinigungsstufe einen Katalysator verwendet, der zu mindestens 90 Gew.% aus $TiO_2$ oder $Al_2O_3$ besteht, daß der Katalysator der zweiten Reinigungsstufe zu mindestens 90 Gew.% aus $TiO_2$ besteht und daß die Katalysatoren der beiden Reinigungsstufen als Imprägnierung mindestens eines der Metalle Nickel, Eisen oder Kobalt enthalten.

2. Verfahren nach Anspruch 1, dadurch gekennzeichnet, daß die Katalysatoren zu 0,5 bis 3 Gew.% mit mindestens einem der Metalle Nickel, Eisen oder Kobalt imprägniert sind.

3. Verfahren nach Anspruch 1 oder 2, dadurch gekennzeichnet, daß der ersten Reinigungsstufe eine katalytische Hydrolysestufe zum Entfernen von COS und/oder $CS_2$ vorgeschaltet ist, deren Katalysator zu mindestens 90 Gew.% aus $TiO_2$ oder $Al_2O_3$ besteht.

4. Verfahren nach Anspruch 1 oder einem der folgenden, dadurch gekennzeichnet, daß die Temperaturen in der ersten und zweiten Reinigungsstufe 80 bis 150 °C betragen.

5. Verfahren nach Anspruch 1 oder einem der folgenden, dadurch gekennzeichnet, daß die erste und die zweite Reinigungsstufe einen Katalysator enthalten, der zu mindestens 95 Gew.% aus $TiO_2$ mit einer Oberfläche nach BET von mindestens 50 $m^2$/g besteht.

**Claims**

1. A process for purifying exhaust gas containing $H_2S$ and $SO_2$, the exhaust gas, which contains at least 2.2 mol $H_2S$ per mol $SO_2$, being conveyed through a first catalytic purification stage involving extensive removal of $SO_2$ and formation of elementary sulphur, whereafter oxygen is mixed with the exhaust gas from the first purification stage, elementary sulphur is likewise produced from the mixture in a second catalytic purification stage involving reaction of $H_2S$, and the catalyst from at least one purification stage is periodically regenerated by the removal of the elementary sulphur, characterized in that a catalyst is used in the first purification stage of which at least 90 % by weight is $TiO_2$ or $Al_2O_3$, in that at least 90 % by weight of the catalyst of the second purification stage is $TiO_2$ and in that the catalysts of both purification stages contain as impregnant at least one of the metals nickel, iron or cobalt.

2. A process according to claim 1, characterized in that the catalysts are impregnated to a level of 0.5 to 3 % by weight with at least one of the metals nickel, iron or cobalt.

3. A process according to claim 1 or claim 2, characterized in that a catalytic hydrolysis stage for the removal of COS and/or $CS_2$ precedes the first purification stage, the catalyst of which hydrolysis stage contains at least 90 % by weight $TiO_2$ or $Al_2O_3$.

4. A process according to claim 1 or any of the following claims, characterized in that the temperatures in the first and second purification stages amount to from 80 to 150°C.

5. A process according to claim 1 or any of the following claims, characterized in that the first and second purification stages contain a catalyst which contains at least 95 % by weight $TiO_2$ and has a surface area according to BET of at least 50 $m^2/g$.

**Revendications**

1. Procédé d'épuration d'un effluent gazeux contenant $H_2S$ et $SO_2$, qui consiste à envoyer l'effluent gazeux qui contient, par mole de $SO_2$, au moins 2,2 moles de $H_2S$ dans un premier étage d'épuration catalytique, avec élimination poussée de $SO_2$ et formation de soufre élémentaire, à ajouter à l'effluent gazeux sortant du premier étage d'épuration de l'oxygène, à produire à partir du mélange, dans un deuxième étage d'épuration catalytique, également du soufre élémentaire par réaction de $H_2S$, et à régénérer périodiquement le catalyseur de l'un au moins des stades d'épuration par élimination du soufre élémentaire, caractérisé en ce qu'il consiste à utiliser au premier stade d'épuration un catalyseur constitué, pour au moins 90 % en poids, de $TiO_2$ ou de $Al_2O_3$,

en ce que le catalyseur du deuxième stade d'épuration est constitué pour au moins 90 % en poids de $TiO_2$, et en ce que les catalyseurs des deux stades d'épuration contiennent sous forme d'imprégnation au moins l'un des métaux que sont le nickel, le fer ou le cobalt.

2. Procédé suivant la revendication 1, caractérisé en ce que les catalyseurs sont imprégnés de 0,5 à 3 % en poids d'au moins l'un des métaux que sont le nickel, le fer et le cobalt.

3. Procédé suivant la revendication 1 ou 2, caractérisé en ce qu'il est prévu, en amont du premier stade d'épuration, un stade d'hydrolyse catalytique destiné à éliminer du COS et/ou du $CS_2$ dont le catalyseur est constitué pour 90 % en poids au moins de $TiO_2$ ou de $Al_2O_3$.

4. Procédé suivant la revendication 1 ou l'une des suivantes, caractérisé en ce que les températures dans les premier et deuxième stades d'épuration sont comprises entre 80 et 150°C.

5. Procédé suivant la revendication 1 ou l'une des suivantes, caractérisé en ce que les premier et deuxième stades d'épuration contiennent un catalyseur constitué pour au moins 95 % en poids de $TiO_2$ et ayant une surface spécifique suivant BET d'au moins 50 $m^2/g$.